# EUROPÄISCHE PATENTSCHRIFT

(11) **EP 4 151 504 B1**
(45) Veröffentlichungstag und Bekanntmachung des Hinweises auf die Patenterteilung: **11.11.2026**
(21) Anmeldenummer: 22196431.5
(22) Anmeldetag: 19.09.2022
(51) Int. Cl.: B62D 21/11, B60G 3/14, B60G 7/02

(54) **HINTERACHSAGGREGAT FÜR EIN FREIZEITFAHRZEUG, CHASSIS UND FREIZEITFAHRZEUG**
REAR AXLE ASSEMBLY FOR A RECREATIONAL VEHICLE, CHASSIS AND RECREATIONAL VEHICLE
ENSEMBLE D'ESSIEU ARRIÈRE POUR VÉHICULE DE LOISIR, CHÂSSIS ET VÉHICULE DE LOISIR

(30) Priorität: 17.09.2021 DE 102021124169
(43) Veröffentlichungstag der Anmeldung: 22.03.2023
(73) Patentinhaber: Erwin Hymer Group SE, 88339 Bad Waldsee (DE)
(72) Erfinder: Kasten, Ole, 21680 Stade (DE); Weltjen, Martin, 21726 Oldendorf (DE); Kaiser, Ria, 21077 Hamburg (DE); Singer, Georg, 89611 Obermarchtal (DE)
(74) Vertreter: Müller Schupfner & Partner Patent- und Rechtsanwaltspartnerschaft mbB (Muc)

(56) Entgegenhaltungen:
- EP-A1- 3 095 624
- WO-A1-2004/089661
- DE-A1- 102010 017 991
- DE-A1- 102020 106 770
- DE-U1- 202016 102 565

## Beschreibung

Die Erfindung betrifft ein Hinterachsaggregat für ein Freizeitfahrzeug, insbesondere für ein Wohnmobil oder einen Wohnwagen, ein Chassis mit einem Hinterachsaggregat und Freizeitfahrzeug mit solch einem Chassis.

Aus der DE 298 17 956 U1 ist Transporter mit einem Hinterachsaggregat bekannt. Der bekannte Transporter dient für den Transport von Neu- oder Unfallfahrzeugen.

Aus der EP 3.095 624 A1 ist eine Achsanordnung bekannt. Die Achsanordnung weist Längsträger und ein Hohlprofil auf.

Aus der WO 2004/089661 A1 ist eine Achsaufhängung für ein Fahrzeug bekannt.

Aufgabe der Erfindung ist es, ein Hinterachsaggregat für ein Freizeitfahrzeug, insbesondere für ein Wohnmobil oder einen Wohnwagen, ein Chassis mit solch einem Hinterachsaggregat und ein Freizeitfahrzeug mit zumindest einem Hinterachsaggregat anzugeben, bei denen eine verbesserte Ausgestaltung und Funktionsweise ermöglicht sind.

Die Aufgabe wird durch ein Hinterachsaggregat mit den Merkmalen des Patentanspruchs 1, ein Chassis mit den Merkmalen des Patentanspruchs 5 und durch ein Freizeitfahrzeug mit den Merkmalen des Patentanspruchs 9 gelöst. Vorteilhafte Weiterbildungen der Erfindung sind in den Unteransprüchen angegeben.

Die Lösung der Aufgabe wird durch ein Hinterachsaggregat für ein Freizeitfahrzeug, insbesondere für ein Wohnmobil oder einen Wohnwagen, mit zumindest einer linken Radaufhängung und zumindest einer rechten Radaufhängung gegeben, wobei ein Achsrahmen vorgesehen ist, der ein linkes Seitenelement und ein rechtes Seitenelement aufweist, wobei einerseits die linke Radaufhängung zumindest mittelbar an dem linken Seitenelement des Achsrahmens befestigt ist, wobei andererseits die rechte Radaufhängung zumindest mittelbar an dem rechten Seitenelement des Achsrahmens befestigt ist, wobei zumindest ein Versteifungselement vorgesehen ist, das einerseits zumindest mittelbar, insbesondere direkt, mit dem linken Seitenelement und andererseits zumindest mittelbar, insbesondere direkt, mit dem rechten Seitenelement verbunden Ist, wobei zumindest ein Versteifungselement zumindest Im Wesentlichen als rohrförmiges Versteifungselement, insbesondere als Achsrohr, ausgebildet Ist, wobei das linke Seitenelement des Achsrahmens als Seitenplatte ausgebildet Ist, wobei das rechte Seitenelement des Achsrahmens als Seitenplatte ausgebildet ist, wobei der Achsrahmen als selbsttragender Achsrahmen ausgebildet ist und wobei zumindest ein Versteifungselement zumindest im Wesentlichen durch ein Versteifungsprofil ausgebildet ist.

Außerdem wird die Aufgabe durch ein Chassis, das für ein Freizeitfahrzeug, insbesondere ein Wohnmobil oder einen Wohnwagen, dient, gelöst, wobei zumindest ein solches Hinterachsaggregat vorgesehen ist. Ferner wird die Aufgabe durch ein Freizeitfahrzeug, insbesondere ein Wohnmobil oder einen Wohnwagen, mit solch einem Chassis gelöst.

Vorteilhaft ist es, dass zumindest ein Versteifungselement vorgesehen ist, das einerseits zumindest mittelbar, insbesondere direkt, mit dem linken Seitenelement und andererseits zumindest mittelbar, insbesondere direkt, mit dem rechten Seitenelement verbunden ist. Durch das Versteifungselement kann insbesondere eine wesentliche Querversteifung erzielt werden, die die selbsttragende Ausgestaltung ermöglicht.

Vorteilhaft ist es, dass zumindest ein Versteifungselement zumindest im Wesentlichen als rohrförmiges Versteifungselement, insbesondere als Achsrohr, ausgebildet ist. Hierdurch ist eine hohe Belastbarkeit bei optimiertem Gewicht möglich.

Vorteilhaft ist es, dass zumindest ein Versteifungselement zumindest im Wesentlichen durch ein Versteifungsprofil ausgebildet ist. Hierdurch können insbesondere in Ergänzung zu einem als Achsrohr ausgebildeten Versteifungselement wesentliche Querkräfte, insbesondere Zug- und Druckkräfte, aufgenommen werden. Dies ermöglicht auch eine Ausgestaltung, bei der weitere Chassisbauteile, insbesondere im Bereich eines Fahrzeugbodens, versteift werden können. Dadurch können solche weiteren Chassisbauteile gegebenenfalls als nicht selbsttragende Chassisbauteile ausgeführt werden, so dass sich eine Gewichts- und Kostenersparnis ergibt.

Vorteilhaft ist es, dass die linke Radaufhängung als Einzelradaufhängung ausgebildet ist und dass die rechte Radaufhängung als Einzelradaufhängung ausgebildet ist. Hierdurch kann insbesondere eine größere Freiheit in Bezug auf eine Achsspur ermöglicht werden. Ferner kann zugleich ein hoher Fahrkomfort beziehungsweise eine Erhöhung der Fahrsicherheit ermöglicht werden.

Vorteilhaft ist es, dass das linke Seitenelement des Achsrahmens als Seitenplatte, insbesondere als profilierte Seitenplatte, ausgebildet ist und dass das rechte Seitenelement des Achsrahmens als Seitenplatte, insbesondere als profilierte Seitenplatte, ausgebildet ist. Dies ermöglicht eine verbesserte Funktionalität. Insbesondere kann das jeweilige Seitenelement dann in vorteilhafter Weise zum Befestigen weiterer Elemente beziehungsweise Bauteile dienen.

Vorteilhaft ist es, dass zumindest ein linkes Feder- und/oder Stoßdämpferelement vorgesehen ist, das zumindest mittelbar mit der linken Radaufhängung zusammenwirkt und das an dem linken Seitenelement insbesondere über ein Festlager gelagert ist, und/oder dass zumindest ein rechtes Feder- und/oder Stoßdämpferelement vorgesehen ist, das zumindest mittelbar mit der rechten Radaufhängung zusammenwirkt und das an dem rechten Seitenelement insbesondere über ein Festlager gelagert ist. Hierdurch kann in einer kompakten Anordnung beispielsweise eine vorteilhafte Federung ermöglicht werden. Ferner können gegebenenfalls zusätzliche Bauteile und/oder ein zusätzlich benötigter Bauraum eingespart werden.

Bei einem Chassis beziehungsweise einem Freizeitfahrzeug mit einem Chassis ist es vorteilhaft, dass zumindest ein Radstandmodul vorgesehen ist und dass das Hinterachsaggregat so zumindest mittelbar mit dem Radstandmodul verbunden ist, dass das Radstandmoduls durch das Hinterachsaggregat querversteift ist. Hierdurch kann das Radstandmodul insbesondere leichter und kostengünstiger ausgestaltet werden. Vorteilhaft ist es in entsprechender Weise, dass ein Triebkopf vorgesehen ist, dass das Radstandmodul vorne zumindest mittelbar mit dem Triebkopf und hinten zumindest mittelbar mit dem Hinterachsaggregat verbunden ist und dass das Radstandmodul teilweise durch den Triebkopf und teilweise durch das Hinterachsaggregat querversteift ist. Vorteilhaft können Radstandsmodule mit unterschiedlicher Länge und/oder Breite, insbesondere Querabstand von z.B. Längsträgern, vorgesehen werden. Durch Auswahl aus zumindest zwei verschiedenen, bevorzugt einer Mehrzahl von Radstandsmodulen kann eine Anpassung an verschiedene Fahrzeuge erfolgen.

Vorteilhaft ist es, dass eine hintere Chassiserweiterung vorgesehen ist und dass die hintere Chassiserweiterung zumindest mittelbar mit dem Hinterachsaggregat verbunden ist. Hierdurch kann in Bezug auf den jeweiligen Anwendungsfall eine geeignete Ausgestaltung realisiert werden. Insbesondere kann durch Entfall der Chassiserweiterung oder durch eine Wahl einer geeigneten Chassiserweiterung, insbesondere einer geeignet langen Chassiserweiterung, dann beispielsweise im Sinne eines modularen Aufbaus mit geringen Anpassungskosten ein Chassis für den jeweiligen Anwendungsfall hergestellt werden.

Somit können sich sich wesentliche Vorteile gegenüber einer selbsttragenden Chassisstruktur, die beispielsweise Längsträger oder einen Leiterrahmen aufweist, ergeben. Insbesondere kann eine Gewichtsreduktion in Bezug auf solch eine Chassisstruktur ermöglicht werden, da eine entsprechend massive Ausgestaltung, die Materialverstärkungen zur Befestigung von Achsen erfordern kann, und somit ein Mehrgewicht eingespart werden können. Außerdem können sich bei einer vorgeschlagenen Lösung zusätzliche Freiheiten bezüglich einer Achsspur ergeben, die bei einer selbsttragenden Chassisstruktur beispielsweise durch Längsträger vorgegeben ist.

Weitere Vorteile und Einzelheiten der Erfindung werden anhand der in den schematischen Figuren dargestellten Ausführungsbeispiele näher erläutert. Hierbei zeigen:
- Fig. 1: einen Chassis mit einem Hinterachsaggregat für ein Freizeitfahrzeug in einer schematischen, räumlichen Darstellung entsprechend einem Ausführungsbeispiel;
- Fig. 2: das in Fig. 1 dargestellte Chassis in einer schematischen Seitenansicht entsprechend dem Ausführungsbeispiel und
- Fig. 3: das Hinterachsaggregat des in Fig. 1 und 2 dargestellten Chassis in einer räumlichen, schematischen Darstellung entsprechend dem Ausführungsbeispiel.

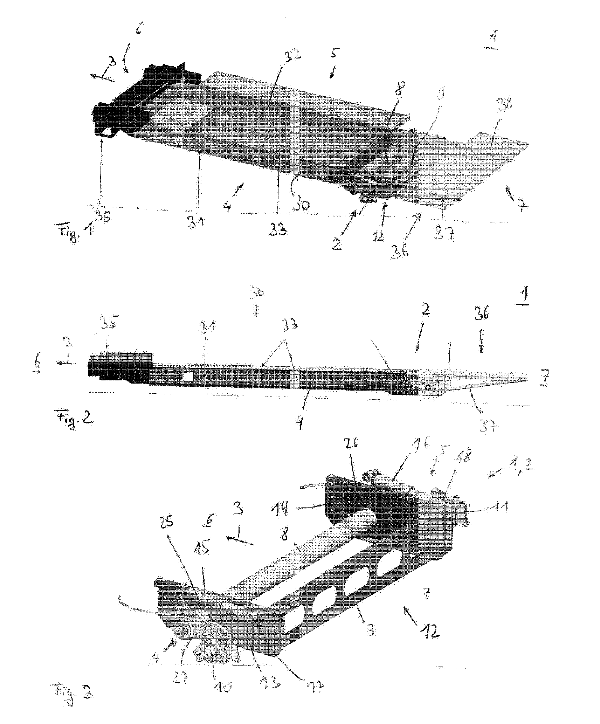

Fig. 1 und 2 zeigen einen Chassis 1 mit einem Hinterachsaggregat 2 für ein Freizeitfahrzeug entsprechend einem Ausführungsbeispiel. Hierbei zeigt Fig. 1 das Chassis 1 in einer schematischen, räumlichen Darstellung. Fig. 2 zeigt das in Fig. 1 dargestellte Chassis 1 in einer schematischen Seitenansicht. Ferner zeigt Fig. 3 das Hinterachsaggregat 2 des in Fig. 1 und 2 dargestellten Chassis 1 in einer räumlichen, schematischen Darstellung.

Das Chassis 1 dient für ein Freizeitfahrzeug, das insbesondere als Wohnmobil oder Wohnwagen ausgestaltet sein kann. In Bezug auf eine Fahrtrichtung 3 des Freizeitfahrzeugs sind eine linke Seite 4 und eine rechte Seite 5 des Chassis 1 gegeben. Ferner sind dadurch Vorne 6 und Hinten 7 am Freizeitfahrzeug beziehungsweise Chassis 1 gegeben.

Das Hinterachsaggregat 2 umfasst in diesem Ausführungsbeispiel eine linke Radaufhängung 10 und eine rechten Radaufhängung 11. Es können aber jeweils auch mehrere, insbesondere zwei, solcher Radaufhängungen 11 vorgesehen sein.

Das Hinterachsaggregat 2 weist einen Achsrahmen 12 mit einem linken Seitenelement 13 und einem rechten Seitenelement 14 auf. Einerseits ist die linke Radaufhängung 10 mittelbar an dem linken Seitenelement 13 des Achsrahmens 12 befestigt. Andererseits ist die rechte Radaufhängung 11 mittelbar an dem rechten Seitenelement 14 des Achsrahmens 12 befestigt.

Der Achsrahmen 12 ist hierbei als selbsttragender Achsrahmen 12 ausgebildet. Hierfür sind Versteifungselemente 8, 9 vorgesehen, die einerseits mit dem linken Seitenelement 13 und andererseits mit dem rechten Seitenelement 14 verbunden sind. Das Versteifungselement 8 ist als rohrförmiges Versteifungselement 8 ausgebildet. In diesem Ausführungsbeispiel ist das Versteifungselement 8 als Achsrohr 8 ausgebildet. Das Versteifungselement 9 ist als Versteifungsprofil 9 ausgebildet. Durch diese Ausgestaltungen sind die Versteifungselement 8, 9 insbesondere quer zur Fahrtrichtung 3 auf Zug und Druck belastbar. Das linke Seitenelement 13 des Achsrahmens 12 ist als profilierte Seitenplatte 13 ausgebildet. Entsprechend ist das rechte Seitenelement 14 des Achsrahmens 12 als profilierte Seitenplatte 14 ausgebildet.

Die linke Radaufhängung 10 und die rechte Radaufhängung 11 sind in diesem Ausführungsbeispiel jeweils als Einzelradaufhängung 10, 11 ausgebildet.

Ferner sind ein linkes Feder- und/oder Stoßdämpferelement 15 und ein rechtes Feder- und/oder Stoßdämpferelement 16 vorgesehen. Das linkes Feder- und/oder Stoßdämpferelement 15 ist an dem linken Seitenelement 13 über ein Festlager 17 gelagert. Ferner wirkt das linkes Feder- und/oder Stoßdämpferelement 15 mittelbar mit der linken Radaufhängung 10 zusammen. Entsprechend ist das rechtes Feder- und/oder Stoßdämpferelement 16 an dem rechten Seitenelement 14 über ein Festlager 18 gelagert, wobei es mittelbar mit der rechten Radaufhängung 11 zusammenwirkt.

In diesem Ausführungsbeispiel weisen die Seitenelemente 13, 14 Durchgangsöffnungen 25, 26 auf, durch die das Achsrohr 8 geführt ist. An einem an dem Achsrohr 8 vorgesehenen Drehlager 27 ist eine Übertragung eines Drehmoments von der linken Radaufhängung 10 auf das linke Feder- und/oder Stoßdämpferelement 15 gegeben. Entsprechend ist ein weiteres Drehlager (nicht dargestellt) vorgesehen, das eine Übertragung eines Drehmoments von der rechten Radaufhängung 11 auf das rechte Feder- und/oder Stoßdämpferelement 15 ermöglicht.

Wie in Fig. 1 und 2 dargestellte ist, ist in diesem Ausführungsbeispiel ein Radstandmodul 30 vorgesehen. Das Radstandmodul 30 ist mit dem Hinterachsaggregat 2 verbunden. Hierbei gewährleistet das Hinterachsaggregat 2 eine Querversteifung für das Radstandmodul 30.

Das Hinterachsaggregat 2 weist Längsträger 31, 32 und einen Aufbauboden 33 auf. Hierbei können Querkräfte auf das Hinterachsaggregat 2 abgeleitet werden. Ferner ist ein Triebkopf 35 vorgesehen. Das Radstandmodul 30 ist nach Vorne 6 mit dem Triebkopf 35 und nach Hinten 7 mit dem Hinterachsaggregat 2 verbunden. Das Radstandmodul 30 kann auch durch den Triebkopf 35 querversteift werden. Dann ist es teilweise durch den Triebkopf 35 und teilweise durch das Hinterachsaggregat 2 querversteift. Außerdem ist eine hintere Chassiserweiterung 36 vorgesehen. Diese ist ebenfalls mit dem Hinterachsaggregat 2 verbunden.

Eine Vorderachse (nicht dargestellt) ist dann am Triebkopf 35 vorgesehen. Ferner ist am Triebkopf ein geeigneter Chassisadapter vorgesehen. Entsprechend einem gewünschten Radstand können die Längsträger 31, 32 voneinander beabstandet sein. Die Längsträger 31, 32 können vergleichsweise leicht ausgebildet werden. Die gegebenenfalls optionale Chassiserweiterung 36 kann einen Fahrzeugüberhang und/oder eine Rahmenabsenkung ermöglichen.

Bei einer abgewandelten Ausgestaltung können auch ein oder mehrere weitere, dem Hinterachsaggregat 2 entsprechende Hinterachsaggregate vorgesehen sein, um dann entsprechend zwei oder mehr Hinterachsen zu realisieren. Versteifungselemente 8,9 können auch in anderer Weise ausgebildet sein und beispielsweise geeignete Aussteifungen, Querstreben oder dergleichen bilden.

Da insbesondere eine Querversteifung durch das Hinterachsaggregat 2 und den Treibkopf 35 realisiert wird, wird eine freiere Ausgestaltung des Radstandmoduls 30 und der hinteren Chassiserweiterung 36 ermöglicht. So können die Längsträger 31, 32 auch als nicht vollständig selbsttragend ausgeführt werden. Zusätzliche Tragfunktionen können dann durch den Fahrzeugaufbau, insbesondere einen Aufbauboden 33 und/oder einen Laufboden, sowie durch Einsätze für Wassertanks, Stauraum oder Batterien, insbesondere Traktionsbatterien, erbracht werden. Hierdurch kann auch eine Reduktion oder der Entfall von Querträgern, die den Zustand der Längsträger 31, 32 bei Längsbelastung definieren, erreicht werden.

Das Hinterachsaggregat 2 kann insbesondere in einfacher Weise breiter ausgestaltet werden, wobei eine breitere Spur ohne eine massivere Ausgestaltung der Achse an sich aufgrund der gering bleibenden Hebelkräfte möglich ist. Somit können ein stabileres Fahrverhalten durch eine breitere Spur der Hinterachse und ein dadurch geringeres Wankverhalten beziehungsweise Kippmoment erzielt werden.

Je nach Ausgestaltung können sich ein oder mehrere der folgenden Vorteile ergeben. Es können eine Funktionsentkopplung von Längsträger und Hinterachse, eine einfache Gestaltung des Radstandmoduls 30 und eine entsprechende freiere Anordnung der Längsträger 31, 32 und des Rahmendesign des Radstandmoduls 30 ermöglicht werden. Ferner kann eine Entkopplung der Längsträger 31, 32 des Radstandmoduls 30 von der hinteren Chassiserweiterung und deren Längsträger 37, 38 ermöglicht werden. Dies erlaubt unterschiedliche Geometrien an dem Radstandmodul 30 und der hinteren Chassiserweiterung 36.

Außerdem können eine geometrische Entkopplung der Rahmenspur im Bereich der Achse, insbesondere eine breitere Rahmenspur, erreicht werden. Ferner kann eine Flexibilität bei Achskonzepten ermöglicht werden, beispielsweise in Bezug auf eine Blattfeder, die auch elektrifiziert sein kann, einen Drehstab, eine Gummifederachse, eine Verbundlenkerachse, und eine elektrifizierte Achse, die beispielsweise einen festen Zentralmotor mit Abtrieb aufweisen kann. Weitere Vorteile können sich auf eine Ergonomie und/oder eine Sicherheit in der Montage beziehen. Außerdem kann eine modulare Bauweise ermöglicht werden, die mehr Flexibilität in der Fertigung erlaubt.

## Patentansprüche

1. Hinterachsaggregat (2) für ein Freizeitfahrzeug, insbesondere für ein Wohnmobil oder einen Wohnwagen, mit zumindest einer linken Radaufhängung (10) und zumindest einer rechten Radaufhängung (11), wobei ein Achsrahmen (12) vorgesehen ist, der ein linkes Seitenelement (13) und ein rechtes Seitenelement (14) aufweist, wobei einerseits die linke Radaufhängung (10) zumindest mittelbar an dem linken Seitenelement (13) des Achsrahmens (12) befestigt ist, wobei andererseits die rechte Radaufhängung (11) zumindest mittelbar an dem rechten Seitenelement (14) des Achsrahmens (12) befestigt ist, wobei zumindest ein Versteifungselement (8, 9) vorgesehen ist, das einerseits zumindest mittelbar, insbesondere direkt, mit dem linken Seitenelement (13) und andererseits zumindest mittelbar, insbesondere direkt, mit dem rechten Seitenelement (14) verbunden ist, wobei zumindest ein Versteifungselement (8) zumindest im Wesentlichen als rohrförmiges Versteifungselement (8), insbesondere als Achsrohr (8), ausgebildet ist, wobei das linke Seitenelement (13) des Achsrahmens (12) als Seitenplatte (13) ausgebildet ist und wobei das rechte Seitenelement (14) des Achsrahmens (12) als Seitenplatte (14) ausgebildet ist,
**dadurch gekennzeichnet,**
**dass** der Achsrahmen (12) als selbsttragender Achsrahmen (12) ausgebildet ist und dass zumindest ein Versteifungselement (9) zumindest im Wesentlichen durch ein Versteifungsprofil (9) ausgebildet ist.

2. Hinterachsaggregat nach Anspruch 1,
**dadurch gekennzeichnet,**
**dass** das linke Seitenelement (13) des Achsrahmens (12) als profilierte Seitenplatte (13) ausgebildet ist und dass das rechte Seitenelement (14) des Achsrahmens (12) als profilierte Seitenplatte (14) ausgebildet ist.

3. Hinterachsaggregat nach Anspruch 1 oder 2,
**dadurch gekennzeichnet,**
**dass** die linke Radaufhängung (10) als Einzelradaufhängung (10) ausgebildet ist und dass die rechte Radaufhängung (11) als Einzelradaufhängung (11) ausgebildet ist.

4. Hinterachsaggregat nach einem der Ansprüche 1 bis 3,
**dadurch gekennzeichnet,**
**dass** zumindest ein linkes Feder- und/oder Stoßdämpferelement (15) vorgesehen ist, das zumindest mittelbar mit der linken Radaufhängung (10) zusammenwirkt und das an dem linken Seitenelement (13) insbesondere über ein Festlager (17) gelagert ist, und/oder dass zumindest ein rechtes Feder- und/oder Stoßdämpferelement (16) vorgesehen ist, das zumindest mittelbar mit der rechten Radaufhängung (11) zusammenwirkt und das an dem rechten Seitenelement (14) insbesondere über ein Festlager (18) gelagert ist.

5. Chassis (1) für eine Freizeitfahrzeug, insbesondere für ein Wohnmobil oder einen Wohnwagen, mit zumindest einem Hinterachsaggregat (2) nach einem der Ansprüche 1 bis 4.

6. Chassis nach Anspruch 5,
**dadurch gekennzeichnet,**
**dass** zumindest ein Radstandmodul (30) vorgesehen ist und dass das Hinterachsaggregat (2) so zumindest mittelbar mit dem Radstandmodul (30) verbunden ist, dass das Radstandmodul (30) durch das Hinterachsaggregat (2) querversteift ist.

7. Chassis nach Anspruch 6,
**dadurch gekennzeichnet,**
**dass** ein Triebkopf (35) vorgesehen ist, dass das Radstandmodul (30) vorne zumindest mittelbar mit dem Triebkopf (35) und hinten zumindest mittelbar mit dem Hinterachsaggregat (2) verbunden ist und dass das Radstandmodul (30) teilweise durch den Triebkopf (35) und teilweise durch das Hinterachsaggregat (2) querversteift ist.

8. Chassis nach einem der Ansprüche 5 bis 7,
**dadurch gekennzeichnet,**
**dass** eine hintere Chassiserweiterung (36) vorgesehen ist und dass die hintere Chassiserweiterung (36) zumindest mittelbar mit dem Hinterachsaggregat (2) verbunden ist.

9. Freizeitfahrzeug, insbesondere Wohnmobil oder Wohnwagen, mit einem Chassis (1) nach einem der Ansprüche 5 bis 8.

## Claims

1. A rear axle assembly (2) for a recreational vehicle, in particular for a motorhome or a caravan, having at least one left wheel suspension (10) and at least one right wheel suspension (11), wherein an axle frame (12) is provided which has a left side element (13) and a right side element (14), wherein, on the one hand, the left wheel suspension (10) is attached at least indirectly to the left side element (13) of the axle frame (12), and, on the other hand, the right wheel suspension (11) is attached at least indirectly to the right side element (14) of the axle frame (12), wherein at least one stiffening element (8, 9) is provided, which is connected, on the one hand, at least indirectly, in particular directly, to the left side element (13) and, on the other hand, at least indirectly, in particular directly, to the right side element (14), wherein at least one stiffening element (8) is designed at least substantially as a tubular stiffening element (8), in particular as an axle tube (8), wherein the left side element (13) of the axle frame (12) is designed as a side plate (13) and wherein the right side element (14) of the axle frame (12) is designed as a side plate (14),
**characterized in**
**that** the axle frame (12) is designed as a self-supporting axle frame (12) and that at least one stiffening element (9) is formed at least substantially by a stiffening profile (9).

2. The rear axle assembly according to claim 1,
**characterized in**
**that** the left side element (13) of the axle frame (12) is designed as a profiled side plate (13) and that the right side element (14) of the axle frame (12) is designed as a profiled side plate (14).

3. The rear axle assembly according to claim 1 or 2,
**characterized in**
**that** the left wheel suspension (10) is designed as an independent wheel suspension (10) and that the right wheel suspension (11) is designed as an independent wheel suspension (11).

4. The rear axle assembly according to any one of claims 1 to 3,
**characterized in**
**that** at least one left spring and/or shock absorber element (15) is provided which interacts at least indirectly with the left wheel suspension (10) and is mounted on the left side element (13), in particular via a fixed bearing (17), and/or in that at least one right spring and/or shock absorber element (16) is provided, which interacts at least indirectly with the right wheel suspension (11) and is mounted on the right side element (14), in particular via a fixed bearing (18).

5. A chassis (1) for a recreational vehicle, in particular for a motorhome or a caravan, having at least one rear axle assembly (2) according to any one of claims 1 to 4.

6. The chassis according to claim 5,
**characterized in**
**that** at least one wheelbase module (30) is provided and that the rear axle assembly (2) is connected at least indirectly to the wheelbase module (30) in such a way that the wheelbase module (30) is transversely stiffened by the rear axle assembly (2).

7. The chassis according to claim 6,
**characterized in**
**that** a drive head (35) is provided, that the wheelbase module (30) is connected at the front at least indirectly to the drive head (35) and at the rear at least indirectly to the rear axle assembly (2), and that the wheelbase module (30) is transversely stiffened partly by the drive head (35) and partly by the rear axle assembly (2).

8. The chassis according to any one of claims 5 to 7,
**characterized in**
**that** a rear chassis extension (36) is provided and that the rear chassis extension (36) is at least indirectly connected to the rear axle assembly (2).

9. A recreational vehicle, in particular a motorhome or caravan, having a chassis (1) according to any one of claims 5 to 8.

## Revendications

1. Ensemble d'essieu arrière (2) pour un véhicule de loisirs, en particulier un camping-car ou une caravane, comprenant au moins une suspension de roue de gauche (10) et au moins une suspension de roue de droite (11), dans lequel il es prévu un cadre d'essieu (12) qui présente un élément latéral de gauche (13) et un élément latéral droite (14), dans lequel, d'un côté, la suspension de roue de gauche (10) est fixée au moins indirectement à l'élément latéral de gauche (13) du cadre d'essieu (12), dans lequel, de l'autre côté, la suspension de roue de droite (11) est fixée au moins indirectement à l'élément latéral de droite (14) du cadre d'essieu (12), dans lequel il est prévu au moins un élément de renforcement (8, 9) qui, d'un côté, est relié au moins indirectement, en particulier directement, à l'élément latéral de gauche (13), et, de l'autre côté, est relié au moins indirectement, en particulier directement, à l'élément latéral de droite (14), dans lequel au moins un élément de renforcement (8) est réalisé au moins sensiblement sous forme d'élément de renforcement tubulaire (8), en particulier sous forme de tube d'essieu (8), dans lequel l'élément latéral de gauche (13) du cadre d'essieu (12) est réalisé sous forme de plaque latérale (13) et dans lequel l'élément latéral de droite (14) du cadre d'essieu (12) est réalisé sous forme de plaque latérale (14),
**caractérisé en ce que**
le cadre d'essieu (12) est réalisé sous forme de cadre d'essieu autoportant (12) et **en ce que**
au moins un élément de renforcement (9) est réalisé au moins sensiblement par un profilé de renforcement (9).

2. Ensemble d'essieu arrière selon la revendication 1,
**caractérisé en ce que**
l'élément latéral de gauche (13) du cadre d'essieu (12) est réalisé sous forme de plaque latérale profilée (13) et **en ce que**
l'élément latéral droit (14) du cadre d'essieu (12) est réalisé sous forme de plaque latérale profilée (14).

3. Ensemble d'essieu arrière selon la revendication 1 ou 2,
**caractérisé en ce que**
la suspension de roue de gauche (10) est réalisée sous forme de suspension de roue unique (11) et **en ce que**
la suspension de roue de droite (11) est réalisée sous forme de suspension de roue unique (11).

4. Ensemble d'essieu arrière selon l'une des revendications 1 à 3,
**caractérisé en ce que**
il est prévu au moins un élément à ressort et/ou amortisseur de choc de gauche (15) qui coopère au moins indirectement avec la suspension de roue de gauche (10) et qui est monté sur l'élément latéral de gauche (13) en particulier par l'intermédiaire d'un palier fixe (17), et/ou **en ce que**
il est prévu au moins un élément à ressort et/ou amortisseur de choc de droite (16) qui coopère au moins indirectement avec la suspension de roue de droite (11) et qui est monté sur l'élément latéral droite (14) en particulier par l'intermédiaire d'un palier fixe (18).

5. Châssis (1) pour un véhicule de loisirs, en particulier un camping-car ou une caravane, avec au moins un ensemble d'essieu arrière (2) selon l'une des revendications 1 à 4.

6. Châssis selon la revendication 5,
**caractérisé en ce que**
il est prévu au moins un module d'empattement (30) et **en ce que**
l'ensemble d'essieu arrière (2) est relié au moins indirectement au module d'empattement (30) de telle sorte que le module d'empattement (30) est renforcé transversalement par l'ensemble d'essieu arrière (2).

7. Châssis selon la revendication 6,
**caractérisé en ce que**
il est prévu une tête motrice (35), **en ce que**
le module d'empattement (30) est relié à l'avant au moins indirectement à la tête motrice (35) est à l'arrière au moins indirectement à l'ensemble d'essieu arrière (2) et **en ce que**
le module d'empattement (30) est renforcé transversalement en partie par la tête motrice (35) et en partie par l'ensemble d'essieu arrière (2).

8. Châssis selon l'une des revendications 5 à 7,
**caractérisé en ce que**
il est prévu une extension de châssis arrière (36) et **en ce que**
l'extension de châssis arrière (36) est reliée au moins indirectement à l'ensemble d'essieu arrière (2).

9. Véhicule de loisirs, en particulier camping-car ou caravane, comprenant un châssis (1) selon l'une des revendications 5 à 8.
